# EUROPÄISCHE PATENTANMELDUNG

(11) **EP 1 569 310 A1**
(43) Veröffentlichungstag der Anmeldung: **31.08.2005**
(21) Anmeldenummer: 04405114.2
(22) Anmeldetag: 27.02.2004
(51) Int. Cl.: H02B 13/035

(54) **Einphasig gekapselte, gasisolierte Schaltanlage**

(71) Anmelder: ABB Technology AG, 8050 Zürich (CH)
(72) Erfinder: Holaus, Walter, 8037 Zürich (CH); Sologuren-Sanchez, Diego, 5430 Wettingen (CH); Mueller, Lorenz, 5412 Gebenstorf (CH); Bruckert, Michael, 8153 Rümlang (CH)
(74) Vertreter: ABB Patent Attorneys

(57) **Zusammenfassung**

Die Schaltanlage ist mehrphasig ausgeführt und weist für jede Phase eine gasgefüllte, modular aufgebaute Kapselung auf. Als Module vorgesehen sind mindestens eine vorwiegend horizontal geführte Sammelschiene (51, 52), ein Leistungsschalter (10) und zwei Trenn- und Erdungsfunktion aufweisende, gleichartig ausgebildete Kombitrenner (71, 72, 73). Ein erster (71) der Kombitrenner trägt einen Abschnitt der Sammelschiene (51) und ist zwischen die Sammelschiene (51) und einen ersten Stromanschluss (11) des Leistungsschalters (10) geschaltet. Der zweite Kombischalter (73) ist zwischen einen Abgang (60) oder eine weitere Sammelschiene der Anlage und den zweiten Stromanschluss (12) des Leistungsschalters (10) geschaltet. Die Kombitrenner (71, 72, 73) sind derart ausgerichtet, dass zwei zu deren Betätigung vorgesehene Antriebsvorrichtungen (81, 82, 83) in die gleiche, vorwiegend horizontale Richtung weisen.

Dieses Schaltanlage ist kompakt ausgebildet, da die Antriebe der Kombitrenner in eine Richtung und mit den Kombitrennern verbundene Abschnitte der Anlage in die entgegengesetzte Richtung geführt sind. Weisen die Antriebe zu einem Bediengang der Anlage hin, so sind die Positionen der Antriebe (81, 82, 83) und damit die Schaltstellungen der Kombischalter (71, 72, 73) dem Bediener der Anlage visuell leicht zugänglich.

## Beschreibung

### TECHNISCHES GEBIET

Bei der Erfindung wird ausgegangen von einer einphasig gekapselten, gasisolierten Schaltanlage nach dem Oberbegriff von Patentanspruch 1. Diese Kapselung ist mit einem Isoliergas, beispielsweise Stickstoff, Luft, Schwefelhexafluorid (SF₆) allein oder in Mischung, von bis zu einigen bar Druck gefüllt. Die Anlage wird typischerweise mit Spannungen von einigen hundert kV betrieben und enthält als Komponenten mindestens eine vorwiegend horizontal geführte Sammelschiene, einen Leistungsschalter mit zwei Stromanschlüssen, von denen ein erster mit der Sammelschiene verbindbar ist, sowie zwei Trenn- und Erdungsfunktion aufweisende Trennschalter (Kombitrenner).

Die Kombitrenner sind gleichartig ausgebildet. Ein erster der Kombitrenner trägt einen Abschnitt der Sammelschiene und ist zwischen die Sammelschiene und den ersten Stromanschluss geschaltet. Der zweite Kombitrenner ist zwischen einen Abgang der Anlage oder eine horizontal geführte zweite Sammelschiene der Anlage und den zweiten Stromanschluss des Leistungsschalters geschaltet. Die Kombitrenner nutzen aus, dass in Schaltanlagen die Funktionen Trennen und Erden häufig am gleichen Ort benötigt werden. Dementsprechend weisen die Kombitrenner jeweils ein isoliergasgefülltes Kapselungsgehäuse auf, an dem im Inneren ein Erdungskontakt befestigt ist. Im Gehäuseinneren angeordnet sind ferner ein an einem Stromleiter befestigter Trennerkontakt sowie ein längs einer Achse verschiebbares und entweder mit dem Trenner- oder mit dem Erderkontakt in oder ausser Eingriff bringbares bewegliches Kontaktelement. Das bewegliche Kontaktelement wird von einem durch das Gehäuse geführten Antrieb mit Kraft beaufschlagt. Mit einem einzigen Antrieb können so die Funktionen des Trennens und des Erdens realisiert werden.

### STAND DER TECHNIK

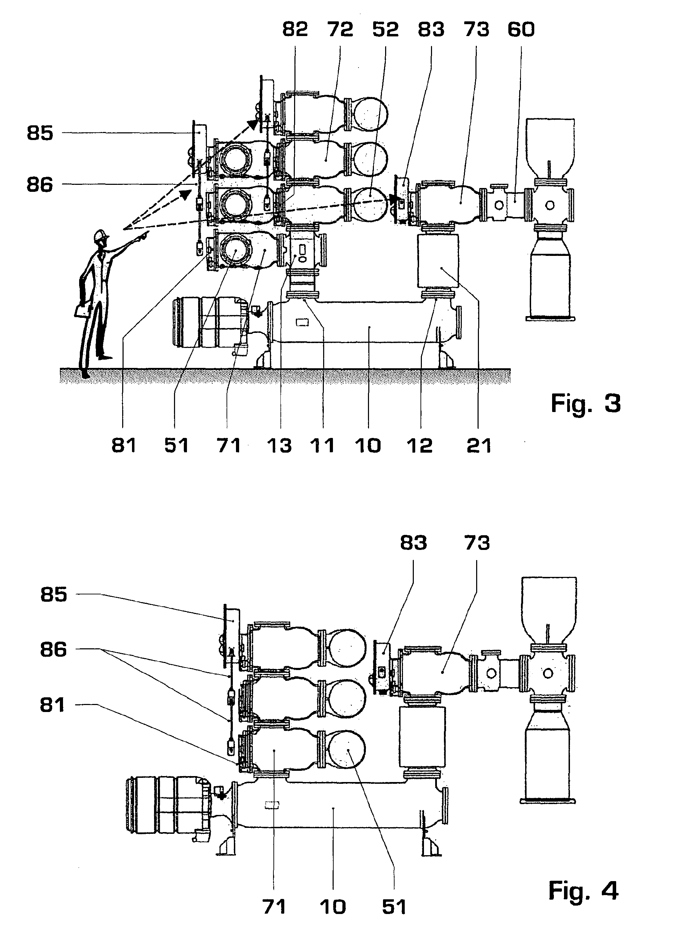

Mit dem Oberbegriff nimmt die Erfindung auf einen Stand der Technik von Schaltanlagen Bezug, wie er in EP 1 249 910 A2 beschrieben ist. In einer in Fig.3 dieses Dokuments beschriebenen Schaltanlage mit einer horizontal geführten Doppelsammelschiene ist ein erster Stromanschluss eines Leistungsschalters über einen ersten oder einen zweiten jeweils Trenn- und Erdungsfunktion aufweisenden Sammelschienentrenner wahlweise mit einer ersten oder einer zweiten Sammelschiene der Doppelsammelschiene verbindbar. Ein in Fig.4 beschriebenes Kuppelfeld weist ebenfalls eine horizontal geführte Doppelsammelschiene auf. Jeder der beiden Stromanschlüsse des Leistungsschalters ist jeweils über einen Trenn- und Erdungsfunktionen aufweisenden Sammelschienentrenner mit lediglich einem Antrieb an eine der beiden Sammelschienen der Doppelsammelschiene geführt. Der Sammelschienentrenner weist eine Vorrichtung zum Erden eines der beiden Stromanschlüsse des Leistungsschalters auf. Er enthält ferner eine Vorrichtung zum Trennen einer der beiden Sammelschienen vom erdbaren Stromanschluss. Bei allen diesen Anlagen werden so separate Antriebe für die Erdungs- und für die Sammelschienentrenn- und Verbindungsfunktion durch einen einzigen Antrieb ersetzt. Aufgrund der Anordnung der Sammelschienen werden für jede Phase allerdings unterschiedlich ausgebildete Sammelschienentrenner benötigt.

Solche Schaltgeräte sind beispielsweise aus Hitachi Review Vol. 51 (2002) No.5 S.169 bis 173 oder aus EP 1 068 624 B1 bekannt. Die in diesen Vorveröffentlichungen beschriebenen Schaltgeräte für gasisolierte, metallgekapselte Schaltanlagen weisen jeweils einen Dreistellungsschalter auf, der mit einem einzigen Antrieb alle Funktionen eines Trenn- und eines Erdungsschalters ausführen kann. Hierbei wird ein in einem Kapselungsgehäuse angeordnetes, bewegliches Kontaktelement längs einer Achse verschoben, welche Achse durch einen Trenner- und durch einen Erdungskontakt geführt ist. Mit einer linearen Bewegung des Kontaktelements können so drei Schaltstellungen des Schaltgerätes erreicht werden. In einer ersten dieser drei Positionen ist das Kontaktelement weder mit dem Trenner- noch mit dem Erderkontakt in Eingriff (neutrale Position), d. h. sowohl ein ins Schaltgerät integrierter Winkeltrenner als auch ein ins Schaltgerät integrierter Erder sind geöffnet. In einer zweiten Position greift das Kontaktelement in den Trennerkontakt ein. Die Trennschaltstelle des Trenners ist nun bei geöffnetem Erder geschlossen. In der dritten Position greift das Kontaktelement in den Erdungskontakt ein. Der Erder ist nun bei geöffnetem Trenner geschlossen.

Antriebskraft für das bewegliche Kontaktelement wird quer zu dessen Bewegungsrichtung übertragen. Dazu benötigt das Kapselungsgehäuse quer zur Achse zusätzlich Raum (Hitachi Review) oder es wird ein speziell ausgeführter und ein Hebelgetriebe aufnehmender Stromleiter benötigt (EP 1 068 624 B1).

### DARSTELLUNG DER ERFINDUNG

Die Erfindung, wie sie in den Patentansprüchen definiert ist, löst die Aufgabe, eine Schaltanlage der eingangs genannten Art anzugeben, welche sich durch kompakte Bauweise bei gleichzeitig grossem Bedienkomfort auszeichnet.

Bei der Schaltanlage nach der Erfindung sind die Kombitrenner derart ausgerichtet, dass zwei zu deren Betätigung vorgesehene Antriebsvorrichtungen in die gleiche vorwiegend horizontale Richtung weisen. Mit den Kombitrennern verbundene Abschnitte der Anlage sind in entgegengesetzter Richtung angeordnet. Aus diesen Gründen kann das Gehäuse des Leistungsschalters verkürzt und die Anlage kompakt und übersichtlich ausgebildet werden. Sind die Antriebe zu einem Bediengang der Anlage hin ausgerichtet, so sind die Positionen der Antriebe und damit auch die Schaltstellungen der Kombitrenner dem Bediener der Anlage visuell zugänglich. Es wird so gute Betriebssicherheit und hoher Bedienkomfort der Anlage erreicht. Diese vorteilhafte Wirkungen treten bereits auf, wenn die Anlage lediglich mit einer Einfachsammelschiene ausgerüstet ist.

Enthält die Schaltanlage ein Querkuppelfeld, weist sie also zusätzlich eine vorwiegend horizontal geführte zweite Sammelschiene auf und trägt ein Gehäuse des zweiten Kombitrenners ein Gehäuse dieser zweiten Sammelschiene, dann ist es vorteilhaft, die Trennergehäuse und die von den Trennergehäusen getragenen Sammelschienen in vertikaler Richtung gegeneinander versetzt anzuordnen. Unter Beibehalt einer kompakten Ausbildung der Schaltanlage ist so auch im Querkuppelfeld eine gute Sichtbarkeit der Antriebe und damit der Schaltstellungen der Kombitrenner sichergestellt.

Enthält die Schaltanlage nach der Erfindung eine Doppelsammelschiene, ist also ebenfalls eine zweite vorwiegend horizontal geführte Sammelschiene vorgesehen, welche jedoch über einen dritten Kombitrenner mit dem ersten Stromanschluss verbindbar ist, trägt ferner ein Gehäuse des ersten Kombitrenners einen Abschnitt der ersten Sammelschiene und ein Gehäuse des gleichartig ausgebildeten dritten Kombitrenners einen Abschnitt der zweiten Sammelschiene und sind beide Trennergehäuse über ein Modul miteinander verbunden, welches einen Verbindungsknoten des ersten Stromanschlusses enthält, dann sollten zweckmässigerweise die Gehäuse des ersten und des dritten Kombitrenners und die von diesen Gehäusen getragenen Sammelschienen in vertikaler Richtung gegeneinander versetzt angeordnet sein. Da die Antriebe nicht beidseitig von den Sammelschienen wegstehen, können die Sammelschienen unabhängig von den Abmessungen des Gehäuses des Leistungsschalters zusammengeführt werden, wodurch die Anlage äusserst kompakt wird. Trotz dieses hohen Grades an Kompaktheit bleibt die gute Sichtbarkeit der Antriebe und damit auch der Schalterpositionen gewährleistet.

Die Kombitrenner sind jeweils als Winkeltrenner ausgeführt. Mindestens der erste beider Schenkel des Winkels ist vorwiegend horizontal angeordnet und weist in koaxialer Anordnung einen Erdungskontakt, einen durch den Erdungskontakt geführten Antrieb und zwei Kontakte eines Trenners auf. Die vorstehend beschriebenen Vorteile können so in besonders wirtschaftlicher Weise erreicht werden. Es wird dann nämlich nur noch ein einziger Schalter für die Funktionen Trennen und Erden benötigt. Unterschiedliche Schalter, wie insbesondere Längstrenner, sind dann entbehrlich.

Wird beim ersten und beim zweiten Kombitrenner der zweite Schenkel des Winkels jeweils vorwiegend vertikal und beim dritten vorwiegend horizontal geführt, so kann die in der Anlage mit Doppelsammelschiene vorgesehene zweite Sammelschiene besonders raumsparend mit dem dritten Kombitrenner verschaltet werden. An den zweiten Schenkel des dritten Kombistrenners ist dann die in Richtung dieses Schenkels erstreckte zweite und an den ersten Schenkel des zweiten Kombitrenners die senkrecht zu diesem Schenkel ausgerichtete erste Sammelschiene angesetzt.

Mit Vorteil enthält ein beweglich ausgeführter beider Trennerkontakte zwei mit einem Haltekörper lösbar verbundene Kontaktteile, von denen ein erstes den Gegenkontakt eines den Erdungskontakt enthaltenden Erders und ein zweites den Gegenkontakt eines feststehenden Kontakts des Trenners bildet. Diese Massnahmen ermöglichen es, durch Öffnen oder Schliessen höchstens zweier lösbarer Verbindungen mit nur einem einzigen Basisschaltgerät drei Schaltgeräte mit den Funktionen Trennen und Erden, nur Trennen oder nur Erden zu bilden. Trägt der Haltekörper beide Kontaktteile, so ist das Schaltgerät als kombinierter Trenn- und Erdungsschalter (Kombitrenner) ausgebildet. Es können dann in einer gasisolierten, gekapselten Schaltanlage die Funktionen Trennen und Erden mit einem lediglich einen einzigen Antrieb aufweisenden Schaltgerät ausgeführt werden. Allerdings bedingt dies, dass Trenn- und Erdungsstelle in der Anlage eng benachbart sind. Liegen Trenn- und Erdungsstelle weit voneinander entfernt und ist nur eine Erdungs- oder Trennaufgabe zu lösen, so braucht nur eines der Kontaktrohre nach Öffnen einer der beiden lösbaren Verbindungen entfernt zu werden, um so ein Schaltgerät mit Trenner- oder Erderfunktion zu schaffen. Daher können in gasisolierten, gekapselten Schaltanlage die elektrischen Funktionen Trennen und Erden, nur Trennen oder nur Erden mit einem einzigen Schaltgerätetyp abgedeckt werden. Es werden so die Kosten für Lagerhaltung und Montage der Anlage reduziert.

Das bei der erfindungsgemässen Anlage mit Doppelsammelschiene vorgesehene und den Verbindungsknoten enthaltende Knotenmodul ist mit Vorteil als T ausgebildet und derart in die Anlage eingebaut, dass die Arme des T vertikal ausgerichtet sind und eine vorwiegend vertikale Längsverbindung bilden, dass der Fuss des T eine vorwiegend horizontale Querverbindung bildet, und dass das Modul des ersten Kombitrenners am nach oben geführten Arm des T und das Modul des dritten Kombitrenners am horizontal geführten Fuss des T mit dem Knotenmodul verbunden ist. Dieses Knotenmodul ermöglicht den Einbau des ersten und des dritten Kombitrenners und verbessert in einfacher Weise durch die Höhenversetzung der ersten und der dritten Kombitrenner sowie der beiden Sammelschienen die Sichtbarkeit der Schalterpositionen und die Revidierbarkeit der Anlage. Zugleich können durch dieses Kapselungsmodul die Gasräume des ersten und des dritten Kombitrenners gegeneinander abgeschottet werden, so dass die Revidierbarkeit der Anlage zusätzlich verbessert wird. Das Gehäuse des Knotenmoduls kann T- oder X-förmig ausgebildet sein, unabhängig davon weist jedoch der von Stromleitern gebildete Verbindungsknoten T-Form auf.

Weist die erfindungsgemässe Anlage zwei oder mehr einphasig gekapselte Phasen auf, so empfiehlt es sich, in allen Phasen die Kombitrenner und gegebenenfalls vorgesehene und lediglich als Trenner oder lediglich als Erder wirkende weitere Schaltgeräte gleichartig auszubilden und auszurichten. Die Gestehungs- und Wartungskosten der erfindungsgemäss Anlage können dann wesentlich reduziert werden. Dies lässt sich unter gleichzeitigem Einsparen von Platz in besonders vorteilhafter Weise dadurch erreichen, dass in unterschiedlichen Phasen angeordnete, aber gleichartige Funktionen erfüllende Schaltgeräte auf einer durch die vertikale und horizontale Richtung bestimmten Diagonalen angeordnet sind. Auf dieser Diagonalen können entsprechend Gestänge angeordnet sein, welche Kraft von einer zentralen Antriebseinheit auf die der Anzahl der Phasen entsprechende Anzahl an Schaltgeräte überträgt.

### BESCHREIBUNG DER ZEICHNUNGEN

Die Erfindung wird nachstehend anhand von Ausführungsbeispielen erläutert. Es zeigt:
- Fig. 1: eine Seitenansicht einer dreiphasigen Schaltanlage nach dem Stand der Technik mit einer Doppelsammelschiene,
- Fig. 2: ein lediglich für eine Phase dargestelltes Schaltschema der Anlage nach Fig.1,
- Fig. 3: eine Seitenansicht einer die gleichen Funktionen wie die Anlage nach Fig.1 erfüllenden Schaltanlage nach der Erfindung,
- Fig.4: eine Seitenansicht einer eine Einfachsammelschiene aufweisenden Ausführungsform der Schaltanlage nach der Erfindung,
- Fig.5: eine Seitenansicht eines als Querkuppelfeld ausgeführten Abschnitts einer Ausführungsform der Schaltanlage nach der Erfindung, und
- Fig.6: eine Aufsicht auf einen Schnitt durch einen in der Schaltanlage nach Fig.3 eingesetzten Kombitrenner 71.

### WEGE ZUR AUSFÜHRUNG DER ERFINDUNG

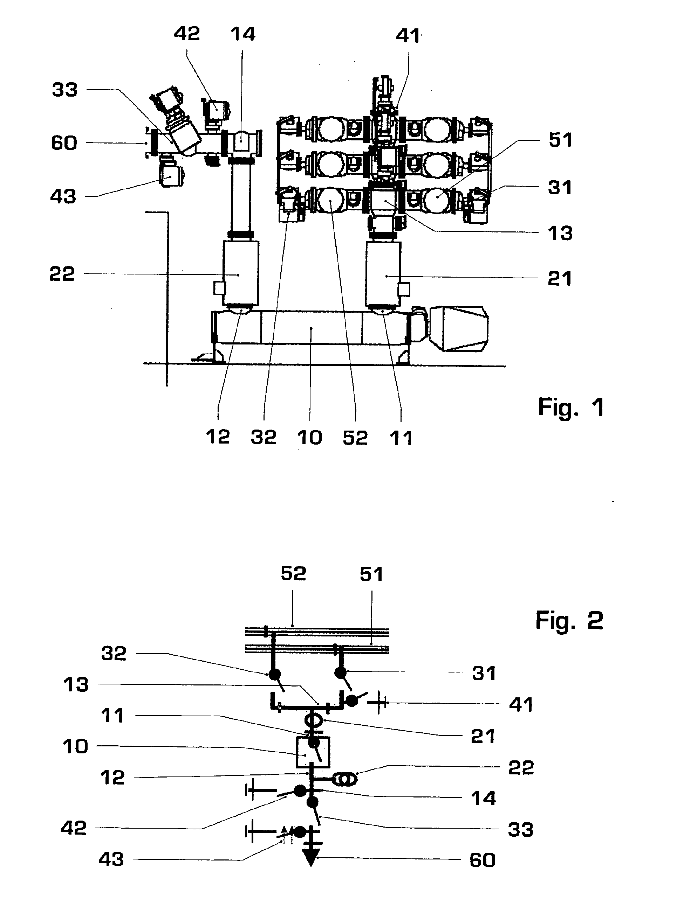

In allen Figuren bezeichnen gleiche Bezugszeichen auch gleichwirkende Teile. Die in Fig.1 dargestellte dreiphasig ausgeführte Schaltanlage nach dem Stand ist Technik ist einphasig gekapselt ausgeführt und weist für jede ihrer drei Phasen eine separate isoliergasgefüllte Metallkapselung auf. Jede Kapselung ist modular aufgebaut und weist das aus Fig.2 ersichtliche Schaltschema auf, in dem mit dem Bezugszeichen 10 ein zwei Stromanschlüsse 11, 12 aufweisender Leistungsschalter bezeichnet ist. Ersichtlich ist der Stromanschluss 11 an einen von einem Stromwandler 21 überwachten Verbindungsknoten 13 und der Stromanschluss 12 an einen von einem Spannungswandler 22 überwachten Verbindungsknoten 14 angeschlossen. An den Verbindungsknoten 13 sind ferner zwei Sammelschienentrenner 31, 32 sowie ein Erder 41 und an den Verbindungsknoten 14 ein Trenner 33 und ein Erder 42 angeschlossen. Die vom Verbindungsknoten 13 abgewandten Anschlüsse der Sammelschienentrenner 31, 32 sind jeweils mit einer von zwei horizontal geführten Sammelschienen 51, 52 verbunden, wohingegen der vom Verbindungsknoten 14 abgewandte Anschluss des Trenners 33 mit einem Erder 43 und einem Abgang 60 oder einer weiteren Sammelschiene verbunden ist.

Aus der in Fig.1 angegebenen Topologie der Anlage ist zu ersehen, dass der Leistungsschalter 10 als liegend angeordnetes Kapselungsmodul ausgeführt ist und ein Schaltergehäuse mit zwei die Stromanschlüsse 11 und 12 repräsentierenden Flanschansätzen aufweist. Auf den dem Stromanschluss 11 zugeordneten Flanschansatz ist ein den Stromwandler 21 enthaltendes, vertikal geführtes Kapselungsmodul befestigt. Dieses Stromwandlermodul 21 trägt ein den Verbindungsknoten 13 aufnehmendes, T-förmig ausgebildetes Modul. An jedem der beiden Arme des T dieses Knotenmoduls 13 ist jeweils ein den Trenner 31 bzw. 32 enthaltendes Modul angesetzt. Die beiden Trennermodule 31 und 32 und die mit den Trennern verbundenen Sammelschienen 51 und 52 sind daher auf gleicher Höhe angeordnet. Der Erder 41 ist am oberen Ende des Knotenmoduls 13 angeordnet. Auf den dem Stromanschluss 12 zugeordneten Flanschansatz ist ein den Spannungswandler 22 enthaltendes, vertikal geführtes Modul befestigt. Dieses Spannungswandlermodul 21 trägt in säulenartiger Anordung ein nicht bezeichnetes Zwischenmodul und ein den Verbindungsknoten 14 aufnehmendes L-förmig ausgebildetes Modul. An einem horizontal ausgerichteten Flanschansatz des Knotenmoduls 14 ist ein horizontal geführtes Kapselungsmodul des Trenners 33 befestigt. Der dem Erden des Verbindungsknoten 14 dienende Erdungsschalter 42 ist am schalterseitigen Ende des Trennermoduls 33, der dem Erden des Abgangs 60 dienende Erder 43 ist am abgangseitigen Ende des Trennermoduls 33 angeordnet.

In der in Fig. 3 dargestellte Schaltanlage nach der Erfindung ist die gleiche Schaltung realisiert wie in der Schaltanlage gemäss Fig.1, jedoch weist diese eine andere Topologie auf. Dies ist zum einen dadurch bestimmt, dass anstelle der drei Trenner 31, 32 und 33 und zwei Erder 41 und 42 mit insgesamt fünf Antrieben lediglich drei Schaltgeräte mit Trenn- und Erdungsfunktion (Kombitrenner 71, 72, 73) eingesetzt sind, die jeweils nur noch einen einzigen Antrieb 81, 82, 83 zur Ausübung beider Funktionen benötigen. Zum anderen ist diese andere Topologie auch dadurch bedingt, dass die Kombitrenner 71, 72, 73 derart ausgerichtet sind, dass die drei zu deren Betätigung vorgesehene Antriebe 81, 82, 83 in die gleiche vorwiegend horizontale Richtung weisen, und dass die Trennermodule 71, 72 und die von ihnen getragenen Sammelschienen 51 und 52 in vertikaler Richtung gegeneinander versetzt angeordnet sind.

Durch Verwendung der Kombitrenner wird die Anzahl der Antriebe von fünf auf drei reduziert. Anstelle von verschiedenartigen Typen von Schaltern, wie Trennern und Erdern, wird der Kombitrenner nurmehr als einziges Schaltgerät zur Lösung von Trenn- und Erdungsaufgaben eingesetzt. Dementsprechend wird nurmehr ein einziger Antriebstyp benötigt, wobei dieser Typ einen zentralen Antriebskopf 85 und Verbindungsgestänge 86 für den Antrieb zwischen den Phasen aufweist. Diese Teile stimmen ersichtlich mit den entsprechenden Teilen des Antriebs 82 überein. Um eine kompakte Anordung zu ermöglichen, sind ersichtlich die Sammelschienen 51 resp. 52 unterschiedlicher Phasen vertikal übereinander angeordnet. Die in den drei Phasen vorgesehenen, aber gleichartige Funktionen erfüllenden Kombitrenner, z.B. 71 oder 72, sind auf einer durch die vertikale und horizontale Richtung bestimmten Diagonalen angeordnet und durch das längs dieser Diagonalen geführte Gestänge 86 miteinander verbunden. In allen drei Phasen sind die Kombitrenner 71, 72, 73 ersichtlich gleichartig ausgebildet und ausgerichtet. Dies gilt auch für gegebenenfalls vorgesehene und lediglich als Trenner oder lediglich als Erder ausgebildete weitere Schaltgeräte.

Die einheitliche Ausrichtung der Kombitrenner 71, 72, 73 in vorwiegend horizontaler Richtung ermöglicht es, dass alle Antriebe 81, 82, 83 und damit auch ihre Positionsanzeigen zu einem Bediengang der Anlage hin orientiert sind. Vom Bediengang aus kann die Anlage daher viel einfacher kontrolliert und gewartet werden. Auch dies ist aus Fig.3 zu ersehen. Da die Antriebe 71 und 72 nach einer Seite ausgerichtet sind und nicht wie die Antriebe der Trenner 31 und 32 beidseitig von den Sammelschienen 51 und 52 wegstehen, wird zudem Platz eingespart.

Aus Fig.3 kann auch entnommen werden, dass die Sichtbarkeit der Antriebe und der mit ihnen verbundenen Positionsanzeigen dadurch noch zusätzlich verbessert wird, wenn die Kombitrenner 71, 72, 73 und die von den Kombitrennern 71 und 72 getragenen Sammelschienen 51 und 52 in vertikaler Richtung gegeneinander versetzt angeordnet sind.

Im Unterschied zu den zuvor gezeigten Ausführungsformen mit der Doppelsammelschiene weist die in Fig.4 dargestellte Schaltanlage lediglich die horizontal geführte Sammelschiene 51 auf, welche vom Gehäuse des Kombitrenners 71 getragen wird. Dadurch, dass die Antriebe der Kombitrenner, nämlich der Antriebe 81 des sammelschienenseitig vorgesehenen Kombitrenners 71 und der Antrieb 83 des abgangseitig vorgesehenen Kombitrenners 73, in horizontaler Richtung geführt sind und in die gleiche Richtung weisen, werden auch bei dieser Schaltanlage mit Einfachsammelschiene der Bedienkomfort und die Zugänglichkeit erheblich verbessert.

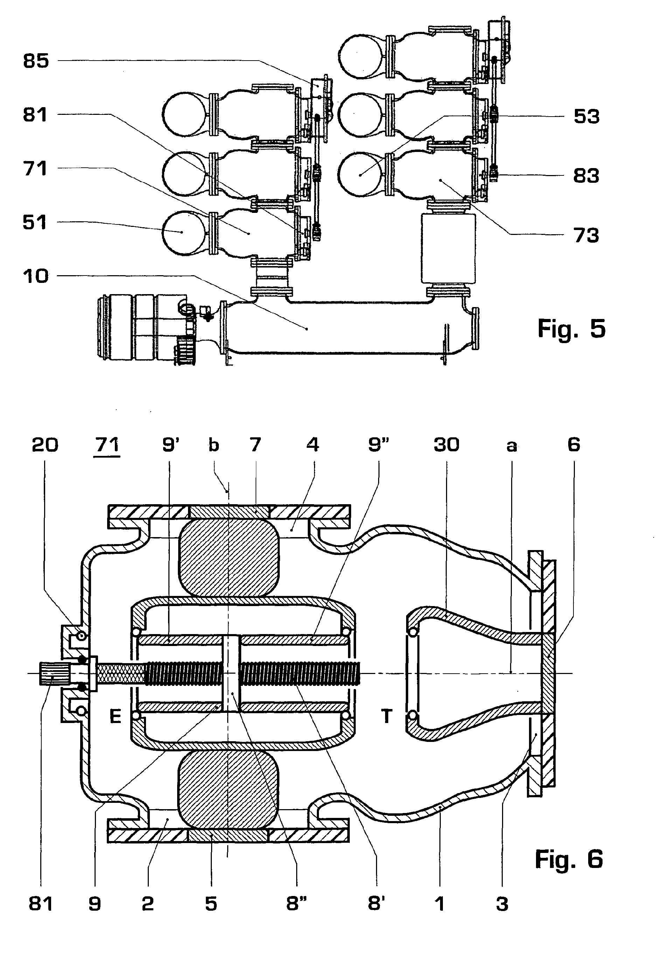

Auch bei dem in Fig.5 dargestellten Querkuppelfeld einer Ausführungsform der Schaltanlage nach der Erfindung sind der Bedienkomfort und die Zugänglichkeit hervorragend. Dadurch, dass die beiden Sammelschienen 51 und 53 und entsprechend auch die beiden Kombitrenner 71 und 73 vertikal gegeneinander versetzt angeordnet sind, sind die Antriebe 81 und 83 besonders gut sichtbar und besonders gut zugänglich. Durch die Ausrichtung der Antriebe 81 und 83 in eine Richtung wird zugleich Platz eingespart. Zugleich wird hierbei die Zahl der benötigten Schaltgeräte mit Trenner- und/oder Erderfunktion halbiert.

In Fig.6 ist der Kombitrenner 71 dargestellt, so wie er in der Schaltanlage nach Fig.3 eingebaut ist. Er weist ein isoliergasgefülltes metallenes Gehäuse 1 auf mit drei Öffnungen 2, 3 und 4, welche jeweils von einem nicht bezeichneten Flansch begrenzt sind. Die Flansche dienen jeweils der Verbindung mit einem nicht dargestellten Gegenflansch des anschliessenden Moduls der Schaltanlage. Die Öffnungen 2 bis 4 sind jeweils durch einen nicht bezeichneten Schottungsisolator gasdicht abgeschlossen, der gegenüber dem Gehäuse 1 elektrisch isoliert jeweils einen mit Hochspannung beaufschlagbaren Stromleiter 5, 6 und 7 trägt.

Zentral durch die Öffnung 3 führt eine vorwiegend horizontale Achse a, welche die Bewegungsrichtung eines durch einen Gewindespindel 8' und eine Spindelmutter 8" verschiebbaren Kontaktelements 9 des Schaltgerätes bestimmt, und entlang welcher der Stromleiter 6 von aussen ins Innere des Gehäuses 1 geführt ist. Die Öffnungen 2 und 4 stehen einander im Gehäuse 1 derart gegenüber, dass die Stromleiter 5 und 7 längs einer zentral durch die Öffnungen geführten Linie b ausgerichtet sind. Achse a und Linie b schliessen miteinander einen rechten Winkel ein und bestimmen so die Geometrie eines die Stromleiter 5 und 6 enthaltenden Strompfades. Auf der Achse angeordnet sind neben dem Leiter 6 und dem beweglichen Kontaktelement auch einer Erdungskontakt 20 und ein mit dem Stromleiter 6 verbundener Trennerkontakt 30.

Der Stromleiter 5 ist mit einem nach rechts geführten Abschnitt der Sammelschiene 51, der Stromleiter 7 mit einem nach links geführten Abschnitt der Sammelschiene 51 und der Stromleiter 6 mit dem Verbindungsknoten 13 verbunden. Ersichtlich ist der Kombitrenner 71 als Winkeltrenner ausgeführt und sind beide Schenkel des Winkels vorwiegend horizontal in der Anlage angeordnet. Der bewegliche Kontakt 9 weist zwei mit einem nicht bezeichneten Haltekörper lösbar verbundene Kontaktteile 9'. 9"auf, von denen ein erstes 9' den Gegenkontakt eines den Erdungskontakt 20 enthaltenden Erders E und ein zweites 9" den Gegenkontakt eines feststehenden Kontakts eines Trenners T bildet. Durch Entfernen eines der Teile 9' oder 9" kann so aus dem Kombitrenner ein Schaltgerät nur mit Erderfunktion E oder nur mit Trennerfunktion T gebildet werden, welches entsprechend den Kombischaltern 71 bis 73 in die Anlage eingebaut werden kann.

Der Schalter 71 ist horizontal eingebaut. Die Schenkel des Winkels, nämlich die Achse 8 und die als Längsverbindung durch den Schalter geführte Sammelschiene 51, verlaufen horizontal. Hingegen sind die Schalter 72 und 73 vertikal eingebaut, da lediglich die Achse a horizontal geführt ist, die Linie b jedoch vertikal nach unten.

Das den Verbindungsknoten 13 enthaltende Knotenmodul ist als T ausgebildet und ist derart in die Anlage eingebaut, dass die Arme des T vertikal geführt sind und eine vorwiegend vertikale Längsverbindung bilden. Der Fuss des T bildet eine vorwiegend horizontale Querverbindung. Werden nun das Modul des Kombitrenners 72 am nach oben geführten Arm des T und das Modul des Kombitrenners 71 am horizontal geführten Fuss des T mit dem Knotenmodul 13 verbunden, so werden dadurch unmittelbar die horizontale Ausrichtung der Antriebsachsen a der Kombitrenner 71 und 72 und zugleich die vertikale Verschiebung der Trenner erreicht. Das Gehäuse des Knotenmoduls 13 kann T-oder X-förmig ausgebildet sein, unabhängig davon weist jedoch der von Stromleitern gebildete Verbindungsknoten T-Form auf. Ist das Gehäuse des Knotenmoduls X-förmig ausgeführt, so kann eine der vier Öffnungen des X mit einem Deckel oder einer Berstscheibe verschlossen sein, kann aber mit Vorteil auch der Durchführung eines Sensors dienen.

### BEZUGSZEICHENLISTE

- 1: Kapselungsgehäuse
- 2,3,4: Öffnungen
- 5, 6, 7: Stromleiter
- 8': Gewindespindel
- 8": Spindelmutter
- 9: Kontaktelement
- 9', 9": Kontaktteile
- 10: Leistungsschalter
- 11, 12: Stromanschlüsse
- 13, 14: Verbindungsknoten, Knotenmodul
- 20: Erdungskontakt
- 21: Stromwandler
- 22: Spannungswandler
- 30: Trennerkontakt
- 31,32,33: Trenner
- 41,42,43: Erder
- 51,52: Sammelschienen
- 60: Abgang
- 71, 72, 73: Kombitrenner
- 81 , 82, 83: Antriebe
- a: Achse
- b: Linie
- E: Erder
- T: Trenner

## Patentansprüche

1. Einphasig gekapselte, gasisolierte Schaltanlage in Modulbauweise, enthaltend mindestens
eine vorwiegend horizontal geführte erste Sammelschiene (51),
einen Leistungsschalter (10) mit zwei Stromanschlüssen (11, 12), von denen ein erster (11) mit der ersten Sammelschiene (51) verbindbar ist, und
zwei Trenn- und Erdungsfunktion aufweisende, gleichartig ausgebildete Kombitrenner (71, 72, 73), von denen ein erster (71) zwischen die erste Sammelschiene (51) und den ersten Stromanschluss (11) und der zweite (73) zwischen einen Abgang (60) oder eine vorwiegend horizontal geführte zweite Sammelschiene (53) der Anlage und den zweiten Stromanschluss (12) des Leistungsschalters (10) geschaltet ist,
wobei ein Gehäuse (1) des ersten Kombitrenners (71) einen Abschnitt der ersten Sammelschiene (51) trägt,
**dadurch gekennzeichnet,**
**dass** die Gehäuse (1) der Kombitrenner (71, 72, 73) derart ausgerichtet sind, dass zwei zu deren Betätigung vorgesehene Antriebsvorrichtungen (81, 82, 83) in die gleiche, vorwiegend horizontale Richtung weisen.

2. Schaltanlage nach Anspruch 1,
**dadurch gekennzeichnet,**
**dass** das Gehäuse (1) des zweiten Kombitrenners (73) einen Abschnitt der zweiten Sammelschiene (53) trägt, und
**dass** die Trennergehäuse (1) und die von ihnen getragenen Sammelschienen (51, 53) in vertikaler Richtung gegeneinander versetzt angeordnet sind.

3. Schaltanlage nach Anspruch 1,
**dadurch gekennzeichnet,**
**dass** mindestens eine vorwiegend horizontal geführte dritte Sammelschiene (52) vorgesehen ist, welche über einen dritten Kombitrenner (72) mit dem ersten Stromanschluss (11) verbindbar ist,
**dass** ein Gehäuse (1) des ersten Kombitrenners (71) einen Abschnitt der ersten (51) und ein Gehäuse (1) des gleichartig ausgebildeten dritten Kombitrenners (72) einen Abschnitt der dritten Sammelschiene (52) trägt, dass beide Trennergehäuse über ein Modul miteinander verbunden sind, welches einen Verbindungsknoten (13) des ersten Stromanschlusses (11) enthält, und
**dass** die Gehäuse des ersten (71) und des dritten Kombitrenners (72) und die von diesen Gehäusen getragenen Sammelschienen (51, 52) in vertikaler Richtung gegeneinander versetzt angeordnet sind.

4. Schaltanlage nach einem der Ansprüche 1 bis 3, **dadurch gekennzeichnet, dass** die Kombitrenner (71, 72, 73) jeweils als Winkeltrenner ausgeführt sind,
wobei mindestens der erste (a) beider Schenkel (a, b) des Winkels vorwiegend horizontal angeordnet ist und in koaxialer Anordnung einen Erdungskontakt (20), einen durch den Erdungskontakt geführten Antrieb (81) und zwei Kontakte (9, 30) eines Trenners enthält.

5. Schaltanlage nach Anspruch 4, **dadurch gekennzeichnet, dass** einer der zwei Trennerkontakte (9) beweglich ausgeführt ist und zwei mit einem Haltekörper lösbar verbundene Kontaktteile (9', 9") enthält, von denen ein erstes (9') den Gegenkontakt eines den Erdungskontakt (20) enthaltenden Erders (E) und ein zweites (9") den Gegenkontakt eines feststehenden Kontakts (30) des Trenners (T) bildet.

6. Schaltanlage nach einem der Ansprüche 4 oder 5, **dadurch gekennzeichnet, dass** der zweite Schenkel (b) des Winkels vertikal oder horizontal geführt ist.

7. Schaltanlage nach einem der Ansprüche 1 bis 6, **dadurch gekennzeichnet, dass** das den Verbindungsknoten (13) enthaltende Modul als T ausgebildet und derart in die Anlage eingebaut ist, dass die Arme des T vertikal ausgerichtet sind und eine vorwiegend vertikale Längsverbindung bilden, dass der Fuss des T eine vorwiegend horizontale Querverbindung bildet, und dass das Modul des ersten Kombitrenners (71) am nach oben geführten Arm des T und das Modul des dritten Kombitrenners (72) am horizontal geführten Fuss des T mit dem Knotenmodul (13) verbunden ist.

8. Schaltanlage nach einem der Ansprüche 1 bis 7 mit zwei oder mehr einphasig gekapselten Phasen, **dadurch gekennzeichnet, dass** in allen Phasen die Kombitrenner (71, 72, 73) und gegebenenfalls vorgesehene und lediglich als Trenner oder lediglich als Erder ausgebildete weitere Schaltgeräte gleichartig ausgebildet und ausgerichtet sind.

9. Schaltanlage nach Anspruch 8, **dadurch gekennzeichnet, dass** in unterschiedlichen Phasen angeordnete, aber gleichartige Funktionen erfüllende Schaltgeräte auf einer durch die vertikale und horizontale Richtung bestimmten Diagonalen angeordnet sind.
